# EUROPÄISCHE PATENTANMELDUNG

(11) **EP 4 173 764 A1**
(43) Veröffentlichungstag der Anmeldung: **03.05.2023**
(21) Anmeldenummer: 22401032.2
(22) Anmeldetag: 26.10.2022
(51) Int. Cl.: B25J 9/00, B02C 13/284, B25J 15/06, B25J 18/02, B02C 13/282

(54) **HORIZONTAL-SHREDDERANLAGE MIT MANIPULATOR**

(30) Priorität: 28.10.2021 DE 102021128203
(71) Anmelder: Comes Maschinen- und Apparatebau GmbH, 54293 Trier-Ehrang (DE)
(72) Erfinder: Prinz, Matthias, 54293 Trier-Ehrang (DE)
(74) Vertreter: Stamer, Jan

(57) **Zusammenfassung**

Horizontal-Shredderanlage mit einem feststehenden Grundgestell (1) zur Aufnahme eines zylinderförmigen Hammerwerks (8) und eines Bodenrostes und einem vom Grundgestell (1) abklappbaren Obergestell (2, 3) zur Abdeckung des Grundgestells (1) mit Hammerwerk (8), wobei die Achse des Hammerwerkes (8) offen zugänglich in den Seitenwänden des Grundgestells (1) gelagert ist und am Grundgestell (1) parallel zur Achse des Hammerwerkes (8) Lager für eine Achse zum Abklappen des Obergestells (2,3) vorgesehen sind und im Innenraum der Shredderanlage austauschbare Schleißplatten (9, 10) angeordnet sind, wobei parallel gegenüberliegend zum Lager (5) des Obergestells (2,3) am Grundgestell (1) mindestens eine Befestigungsfläche (11) für eine Manipulator-Basis (14) vorgesehen ist.

## Beschreibung

Die Erfindung betrifft eine Manipulator-Basis mit Manipulator für Horizontal-Shredderanlagen mit den Merkmalen des Oberbegriffs des Anspruchs 1.

Solche Horizontal-Shredderanlagen sind an sich bekannt und z.T. beschrieben in der Druckschrift DE 10 2019 121 483 B3. Das dort dargestellte und beschriebene Untergestell wird üblicherweise von einem abklappbaren Obergestell abgedeckt. Beim Zerkleinern von insbesondere Großgeräten durch das Hammerwerk fliegen üblicherweise im Innenraum der Shredderanlage Metallteile herum, die die Innenwände beschädigen. Zum Schutz der Innenwände sind üblicherweise sogenannte Schleißplatten vorgesehen. Die Schleißplatten sind auswechselbar durch Schraubverbindungen an den Innenraumwänden der Shredderanlage befestigt. Bei Beschädigung können einzelne oder alle Schleißplatten nach Lösen der Schraubverbindungen ausgewechselt werden. Bei den Schleißplatten handelt es sich im Allgemeinen um Stahlplatten oder Platten aus Gussmaterial mit einem erheblichen Gewicht. Der Zugang zu den Schleißplatten ist nach Abklappen des, aus einem Mittel- und Oberteil bestehenden Obergestells vom Untergestell möglich. Zum Lösen der Schraubverbindungen und Herausnehmen der Schleißplatten ist ein erheblicher körperlicher Einsatz erforderlich, der im Allgemeinen nur durch den Einsatz mehrerer Personen in und am Shreddergehäuse und individueller Manipulations-Werkzeuge bewältigt werden kann. Der damit verbundene Zeitaufwand ist beträchtlich und für die im geöffneten Shreddergehäuse arbeitenden Personen gefährlich und unfallträchtig.

Der Erfindung lag daher die Aufgabe zugrunde, das Auswechseln der Schleißplatten zu vereinfachen, die körperliche Belastung der Arbeitskräfte zu verringern und die Arbeitssicherheit zu erhöhen.

Diese Aufgabe wird erfindungsgemäß durch den Einsatz einfach zu montierender genormter, oder an die spezielle Maschine individuell angepasste Hebe- und Greifwerkzeuge ermöglicht. Die vereinfachte Montage wird durch die kennzeichnenden Merkmale der Ansprüche 1 bis 4 in Verbindung mit Hebe- und Greifwerkzeugen gemäß den kennzeichnenden Merkmalen der Ansprüche 5 bis 9 gelöst.

Wesentlich für die Erfindung ist die Erkenntnis, dass die zur Verbindung des Obergestells mit dem Grundgestell der Shredderanlage vorhandene und vorgesehene lösbare Verbindungsvorrichtung zur Befestigung der an die spezielle Maschine individuell angepasste Hebe- und Greifwerkzeuge, insbesondere zur Befestigung einer mithilfe einer Kranvorrichtung einfach zu montierender Manipulator-Basis auf dem Grundgestell nutzbar gemacht und ermöglicht wird.

Ein Ausführungsbeispiel der Erfindung ist in der Zeichnung schematisch dargestellt und anhand der Figuren näher beschrieben. Dabei zeigen:
- Fig. 1: eine Schnittdarstellung einer Shredderanlage mit Grundgestell und Obergestell,
- Fig. 2: eine Schnittzeichnung wie Fig. 1 mit abgeklapptem Obergestell,
- Fig. 3: Details des Obergestells mit Schleißplatten,
- Fig. 4: eine Manipulator-Basis mit Manipulator,
- Fig. 5: einen auf dem Grundgestell befestigten Manipulator mit Eingriff in das Obergestell im Schnitt,
- Fig. 6: den Manipulator in Ansicht auf den Innenraum des Obergestells,
- Fig. 7a: eine Detailansicht der Knebelvorrichtung in seitlicher Ansicht und
- Fig. 7b: die Funktionsweise der Knebelvorrichtung.

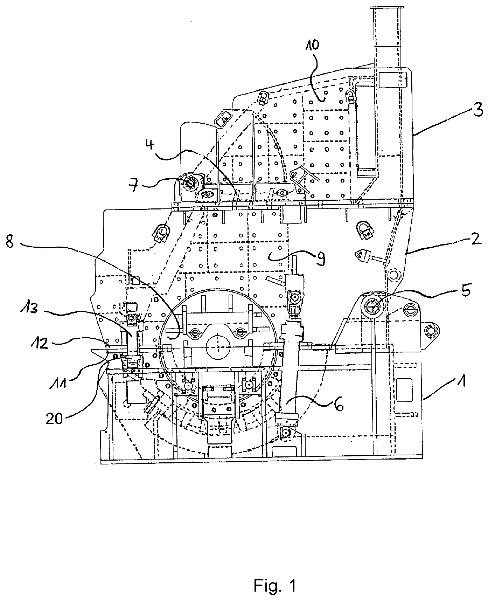

Die in Fig. 1 dargestellte Shredderanlage ist an sich bekannt. Sie besteht aus einen feststehenden Grundgestell 1 und einem üblicherweise aus zwei getrennten Teilen bestehenden Obergestell 2, 3, das durch einen entfernbaren Rost 4 im Innenteil getrennt ist. Der Rost 4 trennt dabei das Mittelteil 2 vom Oberteil 3.

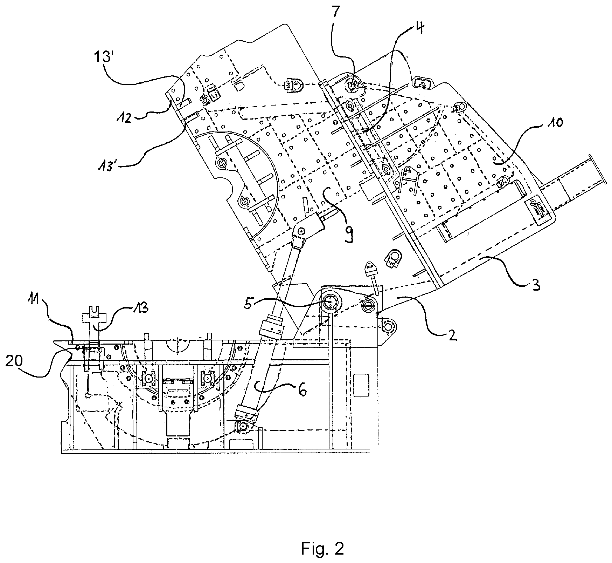

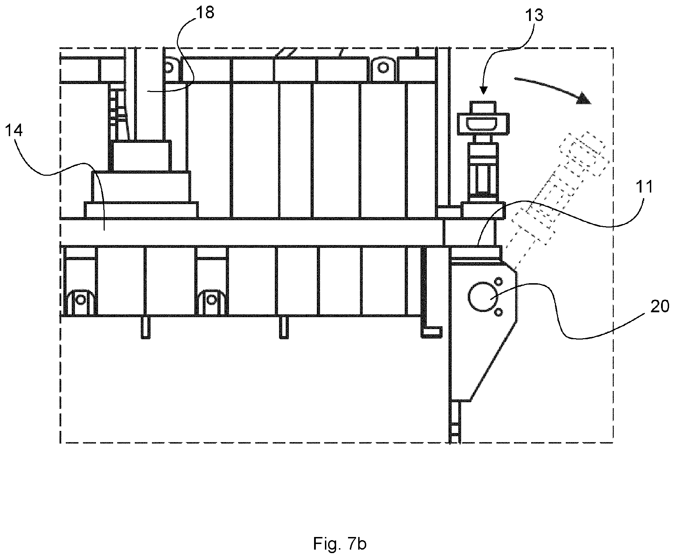

Das Obergestell 2, 3 ist über eine lösbare Verriegelungsvorrichtung, beispielsweise eine Knebelvorrichtung 13 mit dem Grundgestell 1 im Grundzustand und während des Betriebs der Shredderanlage fest verbunden, so dass die Befestigungsfläche 12 am Obergestell 2 auf der Befestigungsfläche 11 am Untergestell 1 aufliegt. Im Stillstand der Anlage kann die Verriegelungsvorrichtung/Knebelvorrichtung 13 gelöst und seitlich, parallel zur Achse des Hammerwerks 8 (s. Fig. 7b) um ihr Drehgelenk 20 geschwenkt werden. Anschließend kann das Obergestell 2 Teil 1 (Mittelteil) mit Obergestell 3 Teil 2 (Oberteil) über ein Gelenk 5 hydraulisch durch Betätigung eines Hydraulikzylinders 6 vom Untergestell 1 abgeklappt werden (Fig.2). Die Befestigungsflächen 11, 12 sind parallel zum Gelenk 5, bzw. der Achse des Hammerwerks 8 ausgeführt.

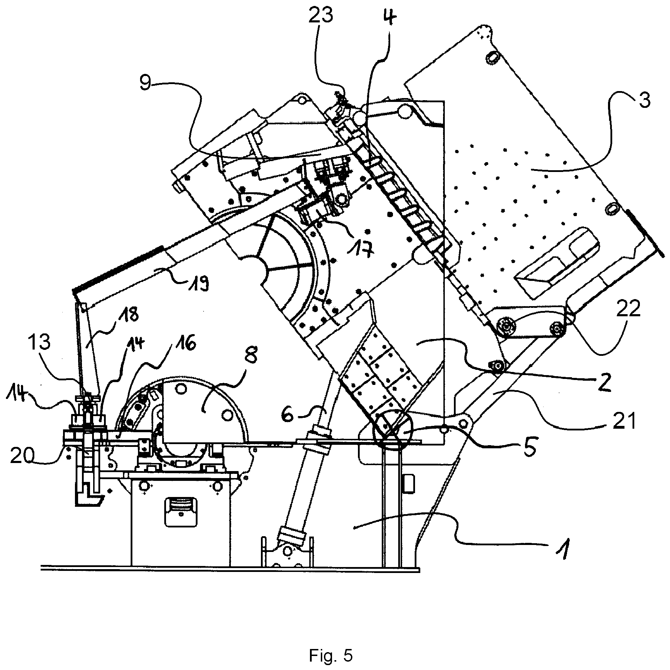

Zur Verdeutlichung der Funktionsweise der Verriegelungsvorrichtung 13 ist in Fig. 2 die Knebelvorrichtung 13 senkrecht stehend, in der eigentlichen Verriegelungsstellung dargestellt. In dem in Fig. 2 dargestellten aufgeklappten Zustand sind die Befestigungsfläche 11 am Untergestell 1 und die Befestigungsfläche 12 am Obergestell 2, 3 voneinander getrennt. Die zur Knebelvorrichtung 13 gehörenden Befestigungslaschen 13' der Knebelvorrichtung 13 sind neben der Befestigungsfläche 12 am Obergestell 2 schematisch dargestellt. Das Teil 2 (Oberteil) des Obergestells 2, 3 kann über ein weiteres in Fig. 5 dargestelltes Gelenk 22 vom Teil 1 (Mittelteil) ebenfalls abgeklappt werden, so dass der Rost 4 z. B. für einen Zugang zu dem darüber liegenden Teil 2 (Oberteil) z.B durch hochklappen um das Gelenk 7 im Obergestell 2, 3 entfernt werden kann.

Durch das nicht weiter im Detail dargestellte Hammerwerk 8 werden zerkleinerte Schrottteile vorrangig gegen die Schleißplatten 9 im Teil 1 des Obergestells 2 (Mittelteil) geschleudert, so dass diese erheblich mehr beschädigt werden und häufiger ausgetauscht werden müssen. Kleine Schrottteile werden jedoch auch durch den Rost 4 gegen die Schleißplatten 10 im Teil 2 des Obergestells 3 (Oberteil) geschleudert, die jedoch nicht so häufig ausgetauscht werden müssen.

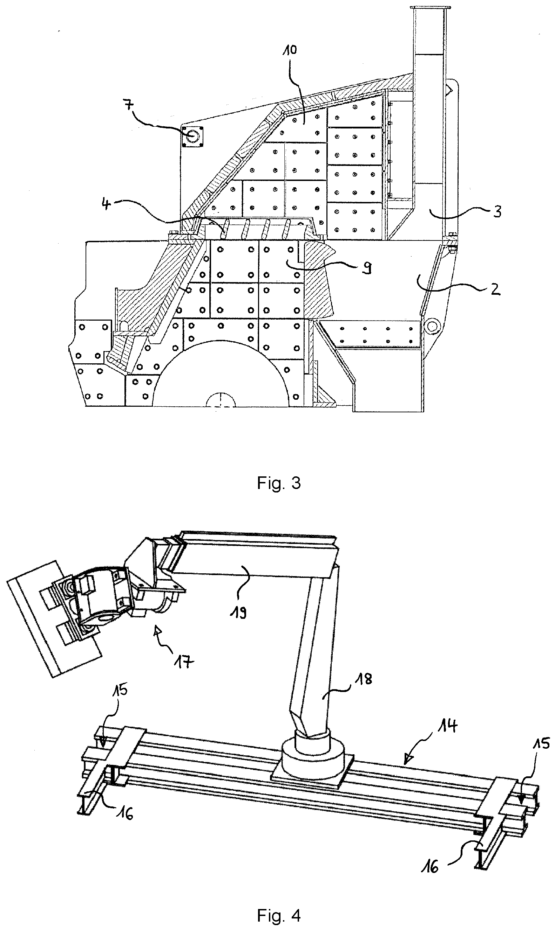

Aus Fig. 3 ist beispielhaft die Anordnung von Schleißplatten 9, 10 an den Seitenteilen im Obergestell 2, 3 entnehmbar.

Im Grundzustand (Fig. 1) ist das Obergestell 2, 3 über die Befestigungsfläche 12 und Knebelvorrichtungen 13 mit der Befestigungsfläche 11 an dem Grundgestell 1 verbunden. Durch Lösen und Abklappen des Knebels 13 (s. Fig. 7b) können beide Gestelle voneinander getrennt werden. Die Befestigungsfläche 11 am Grundgestell 1 dient erfindungsgemäß auch zur Auflage der erfindungsgemäß ausgebildeten Traverse 14 der Manipulator-Basis (Fig.4).

Die Traverse 14 ist im Ausführungsbeispiel nach Fig. 4 durch zwei beabstandet nebeneinander liegende Trägerelement, z.B. Stahl-Doppel-T-Träger gebildet, so dass sich an den beiden Enden Schlitzöffnungen 15 ergeben, in die die vorbeschriebenen Knebel 13 eingreifen können. Vorteilhaft sind dabei die Schlitzöffnungen 15 in gleicher Weise ausgeführt wie die in Fig. 2 gezeigten zur Knebelvorrichtung 13 gehörenden Befestigungslaschen 13' am Obergestell 2. Auf diese Weise kann die Obergestell- und Grundgestell-Verbindungsvorrichtung gleichzeitig als Befestigungsvorrichtung für die Manipulator-Basis am Grundgestell genutzt werden.

An den Enden der Traverse 14 sind in Richtung auf die Seitenwände des Grundgestells 1 ausgerichtete und sich auf diesen abstützende Stützelemente 16 vorgesehen, diese verhindern in vorteilhafter Weise ein Kippen des Mastes 18 der Manipulator-Vorrichtung wenn der Teleskoparm zur Montage einer Schleißplatte 10 sehr weit, z.B. bis in das abgeklappte Obergestell 3 (Oberteil) hineingeführt wird. Die Stützelemente 16 sind an den jeweiligen Enden der Traverse 14, senkrecht und parallel und damit in Richtung auf die Seitenwände des Grundgestells 1 angeordnet. Die Traverse 14 ist durch zwei Stahl-Doppel-T-Träger dargestellt, die schematisch durch kurze Stahl-Doppel-T-Träger beanbstandet miteinander verbunden sind. Die Stützelemente 16 sind in Richtung der Enden der Traverse 14 neben diesen kurzen Verbindungs-Stahl-Doppel-Trägern angeordnet. Für eine Shredderanlage mit einem Rotor, der eine sogenannte Arbeitsbreite von 1600 mm aufweist, beträgt der Abstand der Stützelemente 16 zwischen 1800 mm und 2000 mm. Bei einer Arbeitsbreite des Rotors von 2600 mm beträgt der Abstand der Stützelemente 16 zwischen 2800 mm und 3000 mm. Das heißt, der Abstand der Stützelemente 16 ist 20 mm bis 40 mm größer, als die Arbeitsbreite des Rotors und entspricht idealerweise dem Abstand der Seitenwände des Grundgestells 1.

Die Gesamtbreite der Traverse 14 ist größer als der Innenabstand der Seitenwände des Grundgestells 1. In besonders vorteilhafter Weise ist die Gesamtbreite der Traverse 14 an die Gesamtbreite des Obergestells 2, 3 im Bereich der Befestigungsfläche 12 am Obergestell inklusive der zur Knebelvorrichtung 13 gehörenden Befestigungslaschen 13' angepasst. Auf diese Weise ist sichergestellt, dass die Knebelvorrichtung 13 zu Befestigungszwecken in die Schlitzöffnung 15 an der Traverse 14 eingreifen kann. Eine einfache und sichere, lösbare Befestigung der Manipulator-Basis mit dem Grundgestell 1 ist auf diese Weise realisierbar.

Als Manipulator ist eine hydraulisch oder elektromagnetisch betätigbare Greifvorrichtung 17 vorgesehen, die an einem senkrecht zur Traverse 14 angeordneten drehbaren Mast 18 mit schwenkbar daran angeordnetem Teleskoparm 19 angelenkt ist. Der Manipulator ist erkennbar mittig auf der Traverse 14 angeordnet, so dass er auf alle Schleißplatten 9, 10, auch an den Seitenteilen des Obergestells 2, 3, bzw. Mittelteil 2 und Oberteil 3 ausgerichtet werden kann.

Die Höhe des Mastes 18 bis zum ersten Knickgelenk der Anlenkung des Teleskoparmes 19 ist kleiner als die Öffnung zwischen Grundgestellt 1 und aufgeklapptem Obergestell 2, 3, bzw. des Mitteilteils 2 im Bereich der Befestigungsfläche 12 am Obergestell. Vorteilhaft ist dabei eine Höhe des Mastes 18, die kleiner ist als der Abstand zwischen der Knebelvorrichtung 13 und dem Gelenk 5 für das Obergestell. Weiter vorteilhaft ist dabei eine Höhe des Mastes 18, die größer als der Abstand zwischen der Knebelvorrichtung 13 und der Drehachse des Hammerwerkes 8 ist.

Die in Figur 4 dargestellte erfindungsgemäße Manipulator-Basis mit Manipulator kann auch als Schleißplattenaustauschanordnung oder Schleißplattenaustauschvorrichtung ausgeführt sein. Vorteilhaft ist Manipulator-Basis mit Manipulator, eine Horizontal-Shredderanlagen-Schleißplattenaustauschvorrichtung am Ende des Teleskoparms 19 mit einer Greifvorrichtung 17 ausgeführt, die in alle Raumkoordinaten um x-, y-, und z-Achse dreh- und schwenkbar ausgebildet ist. Vorteilhaft ist als Manipulator eine hydraulisch und/oder magnetisch bzw. elektromagnetisch betätigbare Greifvorrichtung 17 vorgesehen.

In einer besonders vorteilhaften Ausführung ist die Greifvorrichtung 17 für Schleißplatten 9,10 elektromagnetisch oder mechanisch betätigbar und klemmgreifend ausgebildet. Auf diese Weise ist ein sicherer Transport der Austauschschleißplatten an ihren Bestimmungsort im Shreddergehäuse gewährleistet. Erst wenn die Schleißplatte 9, 10 vor Ort gehalten wird, ist es erforderlich dass ein Monteur im Shreddergehäuse die Platten verschraubt. Auf diese Weise ist die Arbeitssicherheit für die Monteure gewährleistet.

In Fig. 5 ist eine Horizontalshredderanlage mit Schleißplattenaustauschvorrichtung, bestehend aus Manipulator-Basis mit Manipulator dargestellt und zeigt den Eingriff in den Innenraum des Obergestells 2, 3 im Schnitt. Die Traverse 14 ist dabei mittels der Verschlusselemente 13, die ansonsten dazu dienen, das Obergestell 2, 3 mit dem Grundgestell 1 lösbar zu verbinden/verriegeln, auf der Befestigungsfläche am Untergestell 11 befestigt. Der am Mast 18 angelenkte Teleskoparm 19 ist 3-fach teleskopisch ausgeführt und im Ausführungsbeispiel zum Austausch einer Schleißplatte 9 im Obergestell 2 (Mittelteil) angelegt. Zum Aufklappen des Obergestells 3 Teil 2 (Oberteil) vom Obergestell 2 Teil 1 (Mittelteil) kann mit Hilfe des Verbindungsstücks 21 zwischen Obergestell 3 Teil 2 (Oberteil) und Grundgestell 1 eine starre Verbindung hergestellt werden. Wird anschließend die schematisch dargestellte Verbindungsvorrichtung 23 am Obergestell gelöst und der Hydraulikzylinder 6 entlastet, klappt lediglich der Teil 1 des Obergestells 2 (Mittelteil) nach unten und das Obergestell 3 Teil 2 (Oberteil) verbleibt zu Wartungszwecken geöffnet.

Das Obergestell 2 Teil 1 (Mittelteil) dreht sich bei Entlastung des Hydraulikzylinders 6 um das Gelenk 5 relativ zum Grundgestell 1 und um das Gelenk 22 für Teil 2 im Obergestell 2, 3 relativ zum Obergestell 3 Teil 2 (Oberteil).

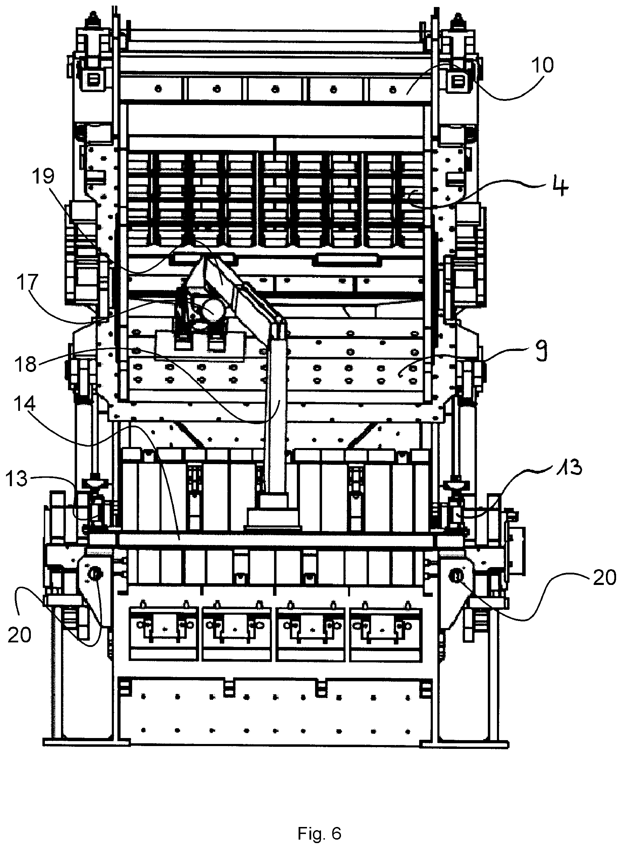

Fig. 6 zeigt in einer Ansicht den Eingriff in den Innenraum, wobei die beiden Teile 2, 3 des Obergestells noch durch den Rost 4 getrennt sind.

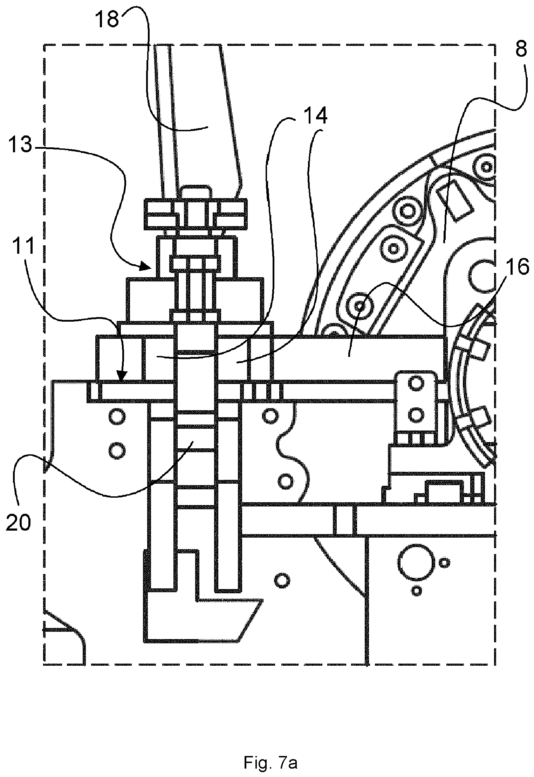

In Fig. 7a ist eine Knebelvorrichtung 13 in seitlicher Ansicht in Richtung auf das schematisch dargestellte Hammerwerk 8 beschrieben. Die Traverse 14 ist mit der Knebelvorrichtung 13 auf der Befestigungsfläche 11 am Untergestell 1 verbunden, ein Stützelement 16 ist in Richtung auf das Hammerwerk ausgerichtet und liegt dabei auf einer Seitenwand des Grundgestells 1 auf. Die Knebelvorrichtung 13 ist um das Drehgelenk 20 der Knebelvorrichtung schwenkbar am Grundgestell angelenkt. Der Mast 18 des Manipulators ist schematisch dargestellt und mittig auf der Traverse 14 drehbar angeordnet.

Fig. 7b beschreibt die Funktionsweise der Knebelvorrichtung 13 in Verbindung mit der Traverse 14 und dem darauf drehbar befestigten schematisch dargestellten Mast 18. Wird die Knebelvorrichtung 13 gelöst, so ist diese um das Drehgelenk 20 der Knebelvorrichtung seitlich in Pfeilrichtung schwenkbar. In diesem Fall, in Fig. 7b gestrichelte Darstellung der Knebelvorrichtung 13 wird die Traverse 14 nicht mehr von der Knebelvorrichtung 13 gegen die Befestigungsfläche 11 am Grundgestell 1 gehalten und die gesamte Manipulator-Basis mit Manipulator kann mit Hilfe, beispielsweise einer nicht weiter dargestellten Kranvorrichtung vom Shredder Grundgestell 1 entfernt werden.

### Bezugszeichenliste

- 1: Grundgestell
- 2: Obergestell Teil 1/Mittelteil
- 3: Obergestell Teil 2/Oberteil
- 4: Rost im Obergestell
- 5: Gelenk für Obergestell
- 6: Hydraulikzylinder
- 7: Gelenk für Rost im Obergestell
- 8: Hammerwerk
- 9: Schleißplatten im Teil 1 des Obergestells
- 10: Schleißplatten im Teil 2 des Obergestellt
- 11: Befestigungsfläche am Untergestell
- 12: Befestigungsfläche am Obergestell
- 13: 13' Knebelvorrichtung/Befestigungslasche
- 14: Traverse
- 15: Schlitzöffnung
- 16: Stützelement
- 17: Greifvorrichtung
- 18: Mast
- 19: Teleskoparm
- 20: Drehgelenk der Knebelvorrichtung
- 21: Verbindungsstück
- 22: Gelenk für Teil 2 im Obergestell
- 23: Verbindungsvorrichtung Obergestell

## Patentansprüche

1. Manipulator-Basis mit Manipulator für Horizontal-Shredderanlagen mit einem feststehenden Grundgestell (1) zur Aufnahme eines zylinderförmigen Hammerwerks (8) und eines Bodenrostes und einem vom Grundgestell (1) abklappbaren Obergestell (2, 3) zur Abdeckung des Grundgestells (1) mit Hammerwerk (8), wobei die Achse des Hammerwerkes (8) offen zugänglich in den Seitenwänden des Grundgestells (1) gelagert ist und am Grundgestell (1) parallel zur Achse des Hammerwerkes (8) Lager für eine Achse zum Abklappen des Obergestells (2,3) vorgesehen sind und im Innenraum der Shredderanlage austauschbare Schleißplatten (9, 10) angeordnet sind, **dadurch gekennzeichnet, dass** parallel gegenüberliegend zum Gelenk (5) des Obergestells (2,3) am Grundgestell (1) mindestens eine Befestigungsfläche (11) für die Manipulator-Basis vorgesehen ist.

2. Manipulator-Basis mit Manipulator nach Anspruch 1, **dadurch gekennzeichnet, dass** als Befestigungsflächen (11,12) die Verschlussflächen mit Verschlusselementen (13) für das Obergestellt (2,3) mit dem Grundgestell (1) vorgesehen sind.

3. Manipulator-Basis mit Manipulator nach Anspruch 1 oder 2, **dadurch gekennzeichnet, dass** als Manipulator-Basis eine an beiden Enden geschlitzt offene Traverse (14) vorgesehen ist, wobei die Schlitzöffnungen (15) zum Eingreifen der Verschlusselemente (13) zur Befestigung des Obergestells (2,3) vorgesehen sind.

4. Manipulator-Basis mit Manipulator nach Anspruch 3, **dadurch gekennzeichnet, dass** an den Enden der Traverse (14) in Richtung auf die Seitenwände ausgerichtete und sich auf diesen abstützende Stützelemente (16) angeordnet sind.

5. Manipulator-Basis mit Manipulator nach einem der vorhergehenden Ansprüche, **dadurch gekennzeichnet, dass** als Manipulator eine hydraulisch und/oder magnetisch bzw. elektromagnetisch betätigbare Greifvorrichtung (17) vorgesehen ist.

6. Manipulator-Basis mit Manipulator nach Anspruch 5, **dadurch gekennzeichnet, dass** der Manipulator aus einem senkrecht zur Traverse (14) angeordneten, drehbaren Mast (18) mit schwenkbar daran angeordnetem Teleskoparm (19) mit Greifvorrichtung (17) für Schleißplatten (9,10) besteht.

7. Manipulator-Basis mit Manipulator nach Anspruch 6, **dadurch gekennzeichnet, dass** der Manipulator mittig auf der Traverse (14) angeordnet ist.

8. Manipulator-Basis mit Manipulator nach Anspruch 6 oder 7, **dadurch gekennzeichnet, dass** die Greifvorrichtung (17) in alle Raumkoordinaten um x-, y-, und z-Achse dreh- und schwenkbar ausgebildet ist.

9. Manipulator-Basis mit Manipulator nach einem der Ansprüche 6 bis 8, **dadurch gekennzeichnet, dass** die Greifvorrichtung (17) für Schleißplatten (9,10) elektromagnetisch oder mechanisch betätigbar klemmgreifend ausgebildet ist.
